# EUROPÄISCHE PATENTSCHRIFT

(11) **EP 1 287 946 B1**
(45) Veröffentlichungstag und Bekanntmachung des Hinweises auf die Patenterteilung: **20.09.2006**
(21) Anmeldenummer: 01119999.9
(22) Anmeldetag: 18.08.2001
(51) Int. Cl.: B23Q 1/62, B23Q 5/28, B23K 26/10

(54) **Werkzeugmaschine mit einer mittels Linearmotoren angetriebenen Funktionseinheit**
Machine tool with a functional unit driven by linear motors
Machine-outil avec unité fonctionelle entrainée par des moteurs linéaires

(43) Veröffentlichungstag der Anmeldung: 05.03.2003
(73) Patentinhaber: TRUMPF Werkzeugmaschinen GmbH + Co. KG, 71254 Ditzingen (DE)
(72) Erfinder: Bundschu, Stephan, 70192 Stuttgart (DE); Feilhauer, Jochen, 71254 Ditzingen (DE)
(74) Vertreter: Kohler Schmid Möbus

(56) Entgegenhaltungen:
- EP-A- 0 868 962
- EP-A- 0 871 284
- DE-A- 3 534 214
- DE-U- 9 218 604
- GB-A- 1 367 808
- US-A- 3 904 900
- US-A- 5 789 892

## Beschreibung

Die Erfindung betrifft eine Werkzeugmaschine mit einer Funktionseinheit, die mittels wenigstens eines ersten Linearmotors an einer ersten Führungsstruktur in Richtung einer ersten Bewegungsachse und die mittels wenigstens eines zweiten Linearmotors und gemeinschaftlich mit der ersten Führungsstruktur an einer zweiten Führungsstruktur in Richtung einer zweiten Bewegungsachse bewegbar ist, wobei jeder der Linearmotoren einen Primärteil sowie einen Sekundärteil aufweist.

Um eine derartige Werkzeugmaschine gemäß dem Oberbegriff des unabhängigen Anspruchs 1 handelt es sich bei der von der Firma TRUMPF®, 71254 Ditzingen, Deutschland, zur Zeit angebotenen Maschine des Typs TRUMATIC® HSL 2502 C. Im Falle dieser Maschine wird eine Funktionseinheit in Form eines Laserschneidkopfs mittels Linearmotoren in einer horizontalen x-y-Ebene bewegt. Als erste Führungsstruktur dient eine in x-Richtung verlaufende Brücke, an welcher der Laserschneidkopf in x-Richtung geführt ist. Eine zweite Führungsstruktur wird von einem Maschinenrahmen gebildet, welcher die Brücke mit dem Laserschneidkopf an Rahmenträgern in y-Richtung beweglich lagert. Linearmotoren mit jeweils einem Primär- sowie einem Sekundärteil sind vorgesehen sowohl zum Antrieb des Laserschneidkopfs an der Brücke als auch zum Antrieb der Einheit aus Laserschneidkopf und Brücke an den Rahmenträgern des Maschinenrahmens. Die der y-Richtung zugeordneten Motor-Sekundärteile sind dabei an den Rahmenträgern des Maschinenrahmens, die zugehörigen Motor-Primärteile an der Brücke angebracht. Gleichfalls an der Brücke angeordnet ist der Sekundärteil des Linearmotors zum Antrieb des Laserschneidkopfs in x-Richtung. Der der x-Richtung zugeordnete Motor-Primärteil ist an dem Laserschneidkopf befestigt.

Aus DE-A-35 34 214 ist ein X-y-Tisch bekannt, der als Funktionseinheit einen Tischkörper umfasst, welcher seinerseits über einen Zwischenschlitten auf einer Basis gelagert ist. Linearmotoren mit Primär- und Sekundärteilen dienen dazu, den Tischkörper an dem Zwischenschlittren in y-Richtung und die Einheit aus Tischkörper und Zwischenschlitten an der Basis in x-Richtung zu bewegen. Die den verschiedenen Bewegungsrichtungen zugeordneten Motor-Primärteile sind dabei einerseits an der dem Tischkörper zugewandten Oberseite und andererseits, diesen Primärteilen gegenüberliegend, an der zu der Basis hin weisenden Unterseite des Zwischenschlittens angebracht. Dementsprechend werden die den verschiedenen Bewegungsachsen des Tischkörpers zugeordneten Motor-Primärteile in vertikaler Richtung durch den Grundkörper des Zwischenschlittens voneinander getrennt. Es ergibt sich folglich eine verhältnismäßig große Bauhöhe des vorbekannten X-y-Tischs.

In einer gemeinsamen Ebene liegen die Primärteile von unterschiedlichen Bewegungsrichtungen zugeordneten Linearmotoren im Fall eines X-y-Tischs, wie er in US-A-6,130,490 offenbart ist. Dieser X-y-Tisch verfügt jedoch nicht über eine mit der ersten Führungsstruktur gattungsgemäßer Werkzeugmaschinen vergleichbare Zwischenstruktur. Darüber hinaus sind an dem vorbekannten X-y-Tisch die den verschiedenen Bewegungsachsen zugeordneten Motor-Primärteile in Richtung jeder der Bewegungsachsen voneinander beabstandet. Es ergibt sich so eine großflächige Gesamtanordnung.

Die vorliegende Erfindung hat sich zum Ziel gesetzt, eine gattungsgemäße Werkzeugmaschine mit einem kompakt bauenden Lineardirektantrieb für wenigstens eine Maschinen-Funktionseinheit bereitzustellen.

Erfindungsgemäß gelöst wird diese Aufgabe durch die Merkmalskombination gemäß Patentanspruch 1. Durch die anspruchsgemäße Nebeneinanderanordnung wird die Möglichkeit eröffnet, die den verschiedenen Bewegungsachsen zugeordneten Primärteile senkrecht zu der durch die Bewegungsachsen definierten Bewegungsebene der Funktionseinheit mit geringer Bauhöhe anzuordnen. Entsprechend wirkt sich die beschriebene Überlappung der Primärteile in Richtung der betreffenden Bewegungsachse aus. Mit der kompakten Bauweise des Lineardirektantriebes für die Funktionseinheit erfindungsgemäßer Werkzeugmaschinen verbunden ist eine Minimierung der beim Verfahren der Funktionseinheit im Maschinenbetrieb zu bewegenden Masse. Dies wiederum erlaubt außerordentlich hohe Verfahrgeschwindigkeiten der Funktionseinheit ohne Beeinträchtigung der Genauigkeit der ausgeführten Bewegungen. Exakte Bearbeitungen bei extrem kurzen Bearbeitungs-Taktzeiten lassen sich mit erfindungsgemäßen Maschinen folglich durchführen.

Besondere Ausführungsarten der Erfindung nach Patentanspruch 1 sind in den abhängigen Patentansprüchen 2 bis 8 beschrieben.

Gemäß Patentanspruch 2 ist das Baumaß der den verschiedenen Bewegungsachsen zugeordneten Primärteile in Richtung der Bewegungsachse der Überlappung minimiert.

Die Zweckmäßigkeit der Erfindungsbauart nach Patentanspruch 3 erklärt sich vor dem Hintergrund, dass in Richtung der zweiten Bewegungsachse die Primärteile und in Richtung der ersten Bewegungsachse wenigstens ein Sekundärteil, nämlich wenigstens ein mit der Funktionseinheit bewegungsverbundener Sekundärteil bewegt werden und dass grundsätzlich bewegte Primärteile für längere Verfahrwege, bewegte Sekundärteile lediglich für kürzere Verfahrwege sinnvoll zu verwenden sind. Anspruchsgemäß ist nun die Abmessung der Primärteile in Richtung der ersten Bewegungsachse besonders klein. Eine wirksame Führung der Primärteile in Richtung der zweiten Bewegungsachse ist folglich mit einer zweiten Führungsstruktur möglich, die in Richtung der ersten Bewegungsachse ebenfalls nur verhältnismäßig klein baut. Die zweite Führungsstruktur kann somit schlank in Richtung der zweiten, "langen" Bewegungsachse verlaufen.

In bevorzugter Ausgestaltung der Erfindung nach Patentanspruch 1 ist ausweislich Patentanspruch 4 ein gegenseitiger Versatz der den verschiedenen Bewegungsachsen zugeordneten Primärteile senkrecht zu der von den Bewegungsachsen definierten Bewegungsebene der Funktionseinheit vorgesehen. Aufgrund dieses Versatzes sind der oder die einer der Bewegungsachsen zugeordneten Primärteile von dem oder den der jeweils anderen Bewegungsachse zugeordneten Sekundärteilen verhältnismäßig weit beabstandet. Störeinflüsse, etwa Wirbelströme, welche die Bewegung der Funktionseinheit bzw. die gemeinschaftliche Bewegung von Funktionseinheit und erster Führungsstruktur in Richtung der verschiedenen Bewegungsachsen behindern könnten, werden dadurch vermieden.

Gemäß Patentanspruch 5 ergibt sich vorteilhafterweise eine bezüglich des oder der der ersten Bewegungsachse zugeordneten Primärteile symmetrische Einleitung der Antriebskraft an den der zweiten Bewegungsachse zugeordneten Primärteilen.

Insbesondere aufgrund der erfindungsgemäß möglichen räumlichen Nähe der den verschiedenen Bewegungsachsen der Funktionseinheit zugeordneten Primärteile lassen sich diese - wie im Falle der Erfindungsvariante nach Patentanspruch 6 vorgesehen - in einem baueinheitlichen Primärteilgehäuse unterbringen. Wird dieses, wie gemäß Patentanspruch 6 ebenfalls vorgesehen, mit wenigstens einem den Primärteilen gemeinsamen Anschluss für äußere Zuund/oder Ableitungen versehen, so reduziert sich die Anzahl der bei der Bewegung der Funktionseinheit mitzuführenden äußeren Zu- und Ableitungen der Primärteile auf ein Minimum. Die Teilgehäuse, welche das Primärteilgehäuse bilden, können ebenso wie die Primärteile selbst zueinander angeordnet sein, d.h. nebeneinander liegen und in einer oder mehreren Richtungen miteinander überlappen. Arten von sinnvollerweise vorzusehenden gemeinsamen Anschlüssen für die Primärteile sind in Patentanspruch 7 aufgeführt.

Als besonders vorteilhaft hat sich das erfindungsgemäße Konzept im Falle einer Werkzeugmaschine in Form einer Laserbearbeitungsmaschine erwiesen, die von einem Laserbearbeitungskopf als Funktionseinheit Gebrauch macht (Patentanspruch 8).

Nachstehend wird die Erfindung anhand schematischer Darstellungen zu einem Ausführungsbeispiel näher erläutert. Es zeigen:
- Fig. 1: eine stark schematisierte Darstellung einer Laserschneidmaschine mit einem an einer Brücke mittels eines Lineardirektantriebes bewegten Laserschneidkopf,
- Fig. 2: die Komponenten des Lineardirektantriebes nach Fig. 1,
- Fign. 3 und 4: zwei Ansichten der Primärteile des Lineardirektantriebes nach den Fign. 1 und 2,
- Fign. 5 und 6: zwei Ansichten entsprechend den Fign. 3 und 4, teilweise aufgebrochen,
- Fig. 7: die Komponenten des Lineardirektantriebes nach den Fign. 1 bis 6 mit Führungseinrichtungen,
- Fig. 8: die Anordnung nach Fig. 7 ergänzt um ein Gehäuse eines Führungsschlittens und
- Fig. 9: die Anordnung nach Fig. 8 an der Brücke nach Fig. 1.

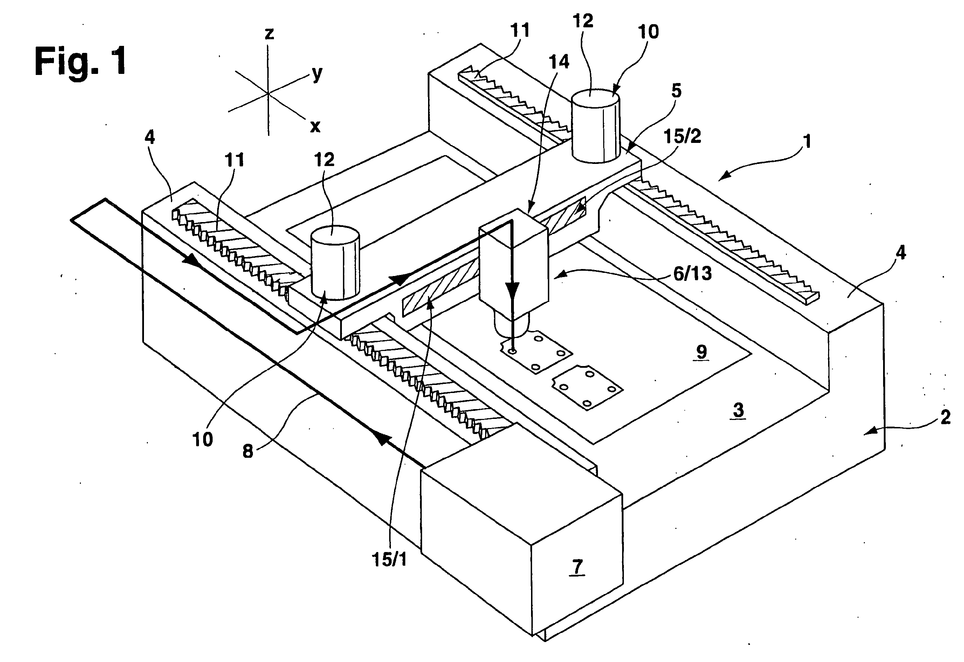

Ausweislich Fig. 1 umfasst eine Werkzeugmaschine in Form einer Laserschneidmaschine 1 ein Maschinenbett 2 mit einer Werkstückauflage 3 sowie dieser beidseits benachbarten Maschinenlängsträgern 4. An letzteren gelagert ist eine Brücke 5 mit einem Laserschneidkopf 6. Dieser steht über eine nicht im Einzelnen gezeigte Strahlführung mit einem Laserresonator 7 in Verbindung, der seinerseits an dem Maschinenbett 2 angebracht ist und einen Laserstrahl 8 erzeugt.

Ein Werkstück, vorliegend ein Blech 9, ist auf der Werkstückauflage 3 abgelegt. Zur Bearbeitung, beispielsweise zum Ausschneiden von Konturen, wird es von dem Laserschneidkopf 6 überfahren. Zu diesem Zweck ist die Brücke 5 mit ihren Längsenden in Richtung einer horizontalen Bewegungsachse x verfahrbar auf den Maschinenlängsträgern 4 des Maschinenbettes 2 gelagert. Der Verfahrantrieb in Richtung der x-Achse wird gebildet von zwei Zahnstangen/Zahnritzel-Antrieben 10, wobei Zahnstangen 11 an den Maschinenlängsträgern 4 befestigt sind und mit den Zahnstangen 11 kämmende Zahnritzel von Elektromotoren 12 an der Brücke 5 angetrieben werden.

An der Brücke 5 ist ein den Laserschneidkopf 6 tragender in Fig. 1 nicht im Einzelnen erkennbarer Führungsschlitten 13 in Richtung einer gleichfalls horizontalen Bewegungsachse y verfahrbar. Letztere verläuft senkrecht zu der x-Achse und definiert gemeinsam mit dieser eine horizontale Bewegungsebene des Laserschneidkopfs 6.

Der Laserschneidkopf 6 schließlich ist an dem Führungsschlitten 13 in Richtung einer vertikalen Bewegungsachse z verfahrbar. Gemeinsam mit der x-Achse und gemeinsam mit der y-Achse spannt die z-Achse jeweils eine vertikale Bewegungsebene des Laserschneidkopfs 6 auf.

Entsprechend der vorstehenden Beschreibung bildet der Führungsschlitten 13 eine erste Führungsstruktur, an welcher der Laserschneidkopf 6 in Richtung einer ersten Bewegungsachse, nämlich in Richtung der z-Achse, bewegbar ist. Die Brücke 5 stellt eine zweite Führungsstruktur dar, an welcher der Laserschneidkopf 6 gemeinschaftlich mit der ersten Führungsstruktur bzw. dem Führungsschlitten 13 in Richtung einer zweiten Bewegungsachse,. nämlich in Richtung der y-Achse, verfahren werden kann. Bei dem Laserschneidkopf 6 handelt es sich um eine Funktionseinheit der Laserschneidmaschine 1.

Zur Bewegung des Laserschneidkopfs 6 in seiner vertikalen y-z-Ebene dient ein Lineardirektantrieb 14, der nachstehend noch im Einzelnen beschrieben wird und von dem in Fig. 1 an der Brücke 5 angebrachte Aneinanderreihungen 15/1, 15/2 von Permanentmagneten andeutungsweise zu erkennen sind.

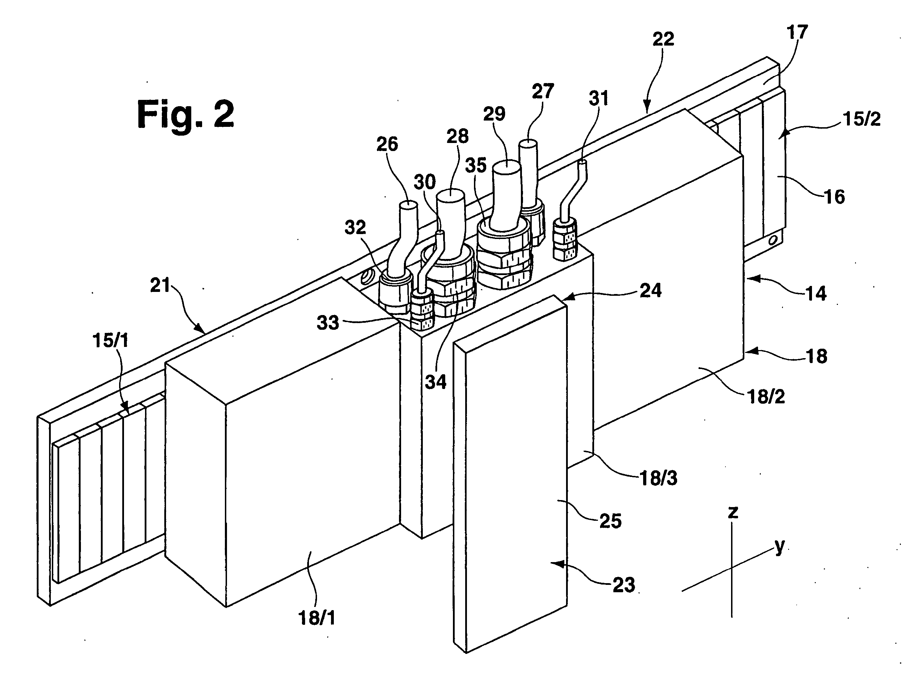

Ausweislich Fig. 2 bestehen die Aneinanderreihungen 15/1, 15/2 aus einer Mehrzahl von in Richtung der y-Achse nebeneinander liegenden Permanentmagneten 16. Gemeinsam mit einer Trägerplatte 17 bilden die Aneinanderreihungen 15/1, 15/2 der Permanentmagnete 16 Sekundärteile herkömmlicher Bauart. Über die Trägerplatte 17 werden die Permanentmagnete 16 mit der Brücke 5 verschraubt. Der Übersichtlichkeit halber ist in Fig. 2 lediglich ein Teil der Permanentmagnete 16 dargestellt.

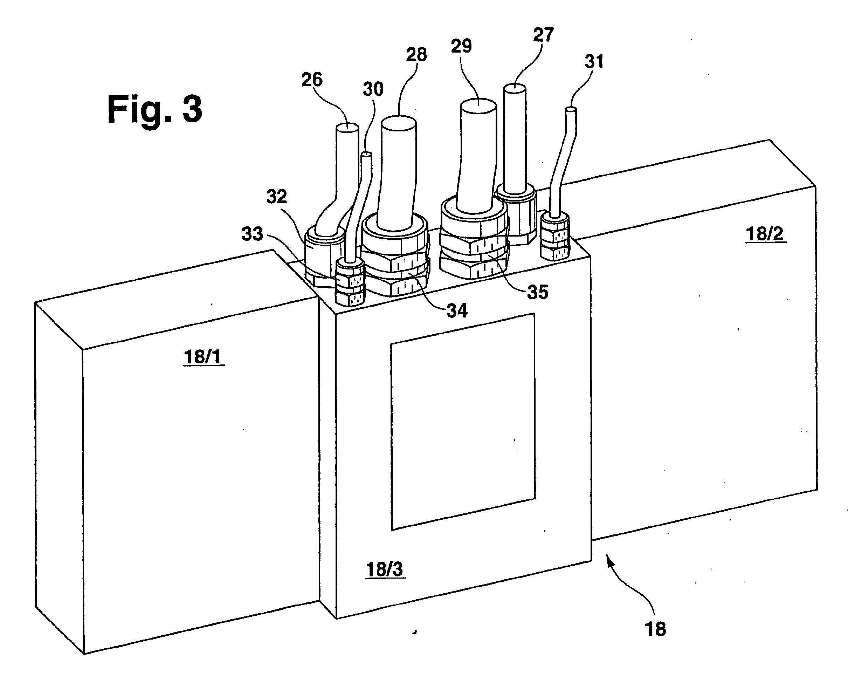

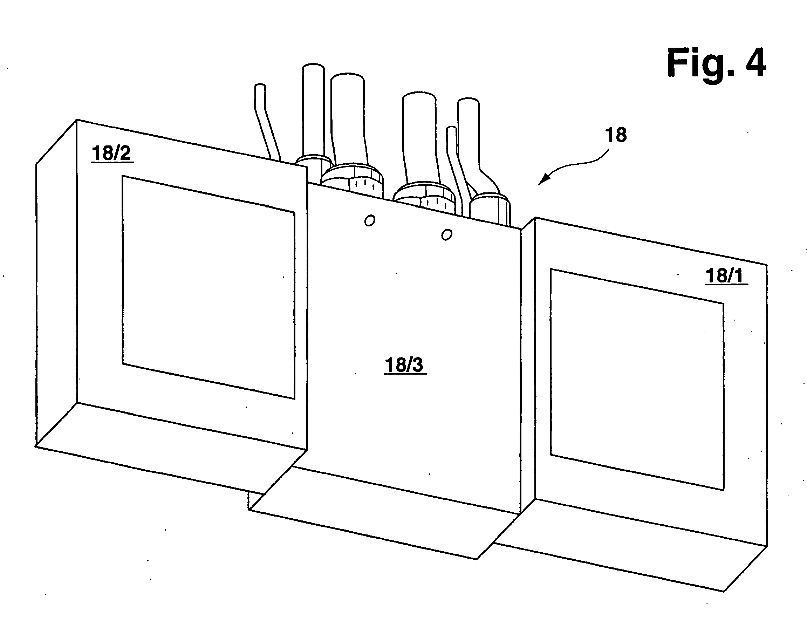

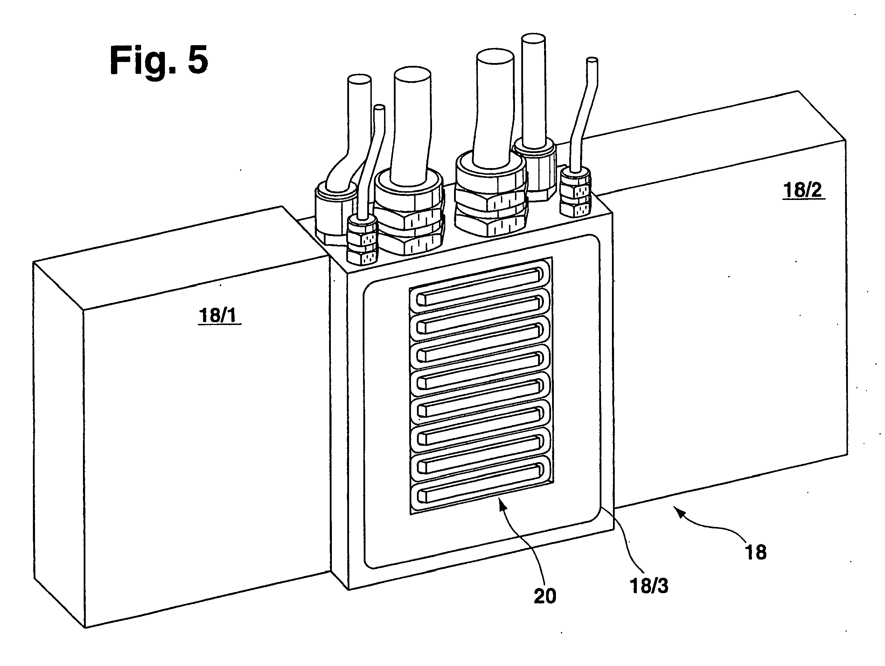

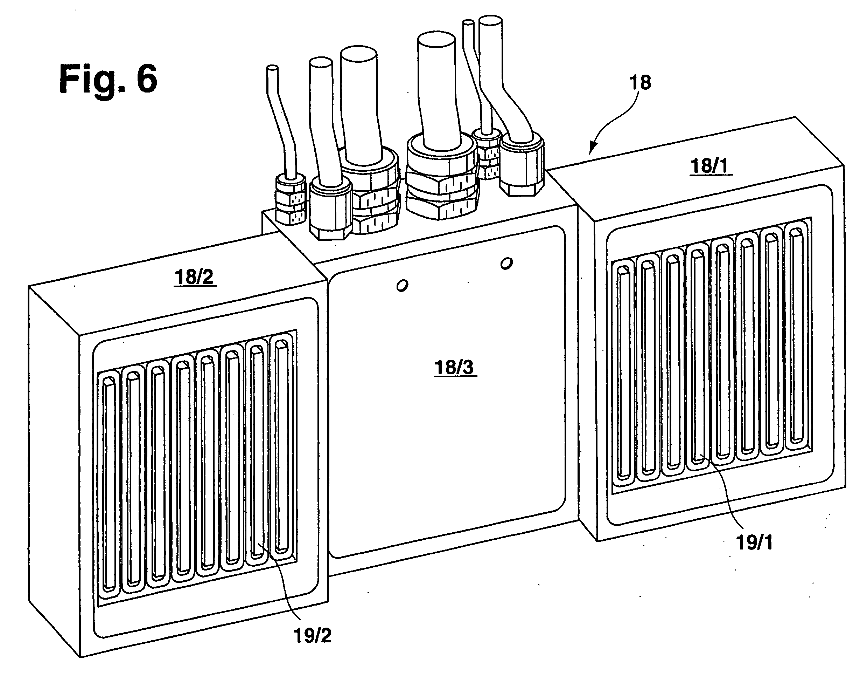

Den Sekundärteilen 15/1, 17; 15/2, 17 gegenüber liegt ein Primärteilgehäuse 18, bestehend aus baueinheitlich miteinander verbundenen Teilgehäusen 18/1, 18/2, 18/3. In deren Innern untergebracht sind Primärteile 19/1, 19/2, 20 (Fign. 5, 6). Bei diesen handelt es sich wie üblich um Eisenpakete mit Wicklungen. In den Fign. 3 und 4 eingerahmt sind die "aktiven Flächen" an den Teilgehäusen 18/1, 18/2, 18/3, d.h. diejenigen Gehäuseflächen, hinter denen die Primärteile 19/1, 19/2, 20 angeordnet sind.

Der Primärteil 19/1 bildet gemeinsam mit dem Sekundärteil 15/1, 17 einen Linearmotor 21, der Primärteil 19/2 gemeinsam mit dem Sekundärteil 15/2, 17 einen Linearmotor 22. Dem Primärteil 20 zugeordnet ist ein Sekundärteil 23, der gemeinsam mit dem Primärteil 20 einen Linearmotor 24 bildet. Der Sekundärteil 23 umfasst in Richtung der z-Achse aneinander gereihte Permanentmagnete, die in den Abbildungen verdeckt liegen sowie eine Trägerplatte 25. Die Primärteile 19/1, 19/2, 20 sind über das Primärteilgehäuse 18 mit dem Führungsschlitten 13 verbunden.

Die Primärteile 19/1, 19/2 einerseits und der Primärteil 20 andererseits sind um 90° gegeneinander gedreht. Aufgrund dieser Ausrichtung der Primärteile 19/1, 19/2, 20 sowie der entsprechenden Ausrichtung der zugehörigen Sekundärteile 15/1, 17; 15/2, 17; 23 können die Linearmotoren 21, 22 zur Bewegung des Führungsschlittens 13 mit dem daran angebrachten Laserschneidkopf 6 in Richtung der y-Achse und kann der Linearmotor 24 zur Bewegung des Laserschneidkopfs 6 an dem Führungsschlitten 13 in z-Richtung verwendet werden.

Im Interesse einer kompakten Bauweise des Lineardirektantriebes 14 sind die Primärteile 19/1, 19/2, 20 bzw. die diese beinhaltenden Teilgehäuse 18/1, 18/2, 18/3 in Richtung der y-Achse nebeneinander und in Richtung der z-Achse einander vollständig überdeckend angeordnet. Die Erstreckung des Primärteils 20 und des Teilgehäuses 18/3 in Richtung der z-Achse entspricht dabei den gleichgerichteten Erstreckungen der Primärteile 19/1, 19/2 bzw. der Teilgehäuse 18/1, 18/2.

Wird der Führungsschlitten 13 mit dem daran gelagerten Laserschneidkopf 6 in Richtung der y-Achse an der Brücke 5 entlang verfahren, so bewegt sich der Primärteil 20 in der genannten Richtung über die den Primärteilen 19/1, 19/2 zugeordneten und entsprechend ausgerichteten Sekundärteile 15/1, 17; 15/2, 17. Damit diese Relativbewegung von Primärteil 20 und Sekundärteilen 15/1, 17; 15/2, 17 nicht zur Erzeugung von die Bewegung des Führungsschlittens 13 bremsenden Wirbelströmen führen kann, ist der Primärteil 20 gegenüber den Primärteilen 19/1, 19/2 von den Sekundärteilen 15/1, 17; 15/2, 17 senkrecht zu der von der y-Achse sowie der z-Achse definierten Bewegungsebene des Laserschneidkopfs 6 zurückgesetzt. Entsprechend gegeneinander versetzt sind der Primärteil 20 und das Teilgehäuse 18/3 einerseits und die Primärteile 19/1, 19/2 und die Teilgehäuse 18/1, 18/2 andererseits gegenüber dem Sekundärteil 23. Auf diese Art und Weise wird eine unerwünschte Wechselwirkung zwischen den Permanentmagneten des Sekundärteils 23 und den Eisenpaketen der Primärteile 19/1, 19/2 verhindert.

Zur Versorgung bzw. Überwachung der Primärteile 19/1, 19/2, 20 dienen äußere Stromversorgungsleitungen 26, 27, eine äußere Kühlmittelversorgungsleitung 28, eine äußere Kühlmittelabfuhrleitung 29 sowie äußere Temperaturüberwachungsleitungen 30, 31. Um die Anzahl der bei der Bewegung des Führungsschlittens 13 mitzuführenden Leitungen zu minimieren, sind die äußere Stromversorgungsleitung 26 und die äußere Temperaturüberwachungsleitung 30 jeweils sowohl dem Primärteil 19/1 als auch dem Primärteil 20 zugeordnet. Aus entsprechenden Gründen führen die äußere Kühlmittelversorgungsleitung 28 sowie die äußere Kühlmittelabfuhrleitung 29 das Kühlmedium zur Kühlung sämtlicher Primärteile 19/1, 19/2, 20. Dabei wird die Verbindung mit den Primärteilen 19/1, 20 bzw. mit den Primärteilen 19/1, 19/2, 20 über gemeinsame Anschlüsse 32, 33, 34, 35 hergestellt, die an dem Primärteilgehäuse 18 vorgesehen sind. Im Gehäuseinnern zweigen von den gemeinsamen Anschlüssen 32, 33, 34, 35 zu den Primärteilen 19/1, 19/2, 20 hinführende Zweigleitungen ab.

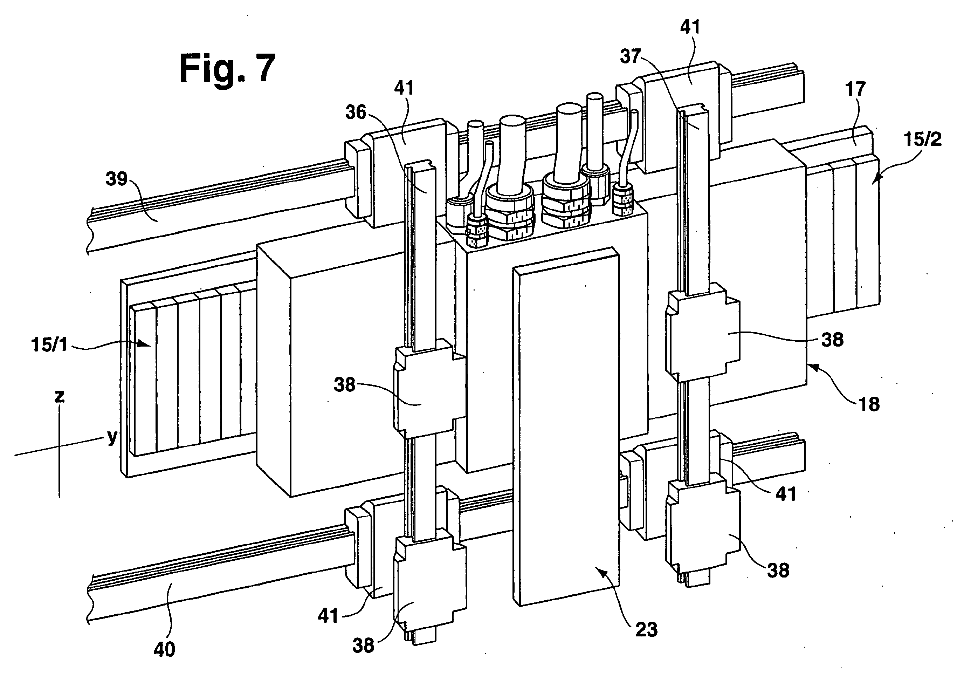

Die Bauteile zur Führung des Laserschneidkopfs 6 an dem Führungsschlitten 13 in Richtung der z-Achse sowie die Bauteile zur gemeinschaftlichen Führung des Führungsschlittens 13 und des Laserschneidkopfs 6 an der Brücke 5 in y-Richtung sind in Fig. 7 zu erkennen. Im Einzelnen handelt es sich dabei um Führungsschienen 36, 37, die mit dem Führungsschlitten 13 verschraubt sind und die Linearlager 38, an denen der Lasersehneidkopf 6 angebracht wird, in Richtung der z-Achse führen. Die Verbindung des Laserschneidkopfs 6 mit den Linearlagern 38 wird über eine Montageplatte hergestellt, die einerseits mit dem Laserschneidkopf 6 und andererseits mit den Linearlagern 38 und der Trägerplatte 25 des Sekundärteils 23 verschraubt wird. Führungsschienen 39, 40 an der Brücke 5 dienen zur Führung von Linearlagern 41 und der daran befestigten Baueinheit aus Führungsschlitten 13 und Laserschneidkopf 6 in Richtung der y-Achse.

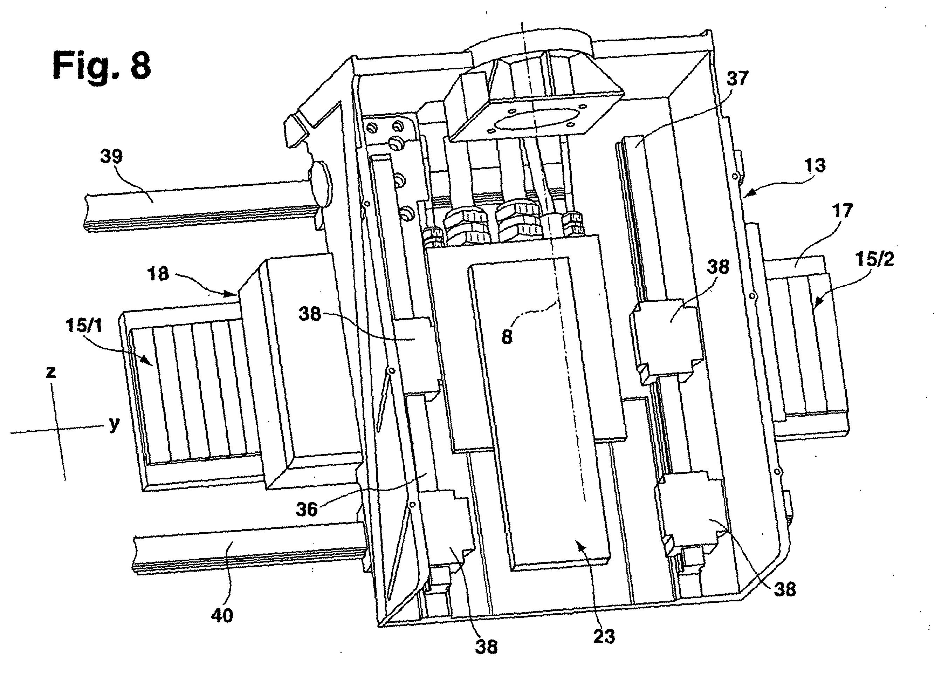

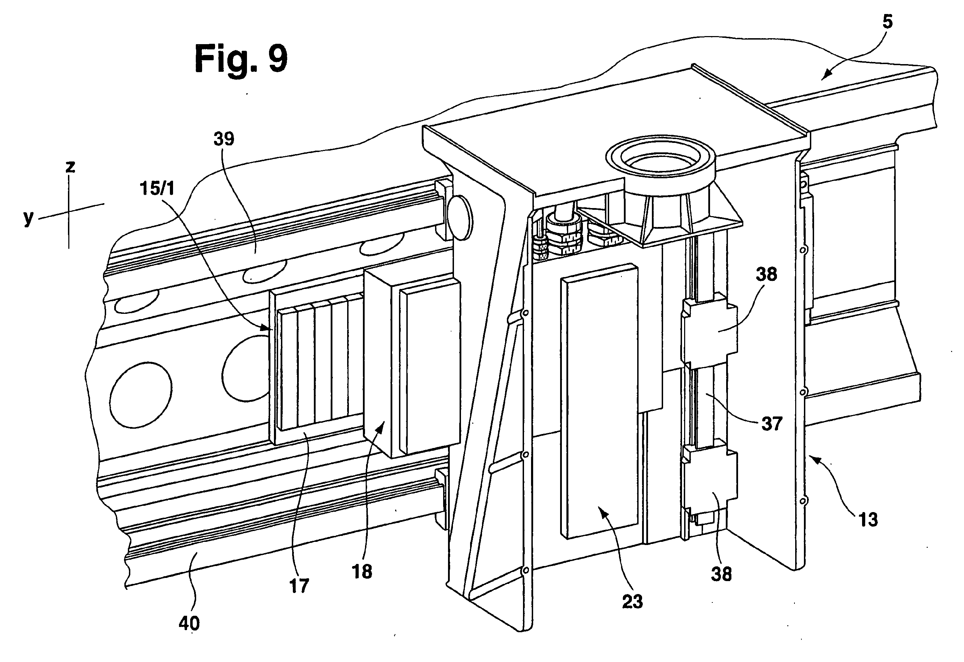

Im Detail ist der Führungsschlitten 13 den Fign. 8 und 9 zu entnehmen. Ausweislich dieser Darstellungen ist der Führungsschlitten 13 nach Art eines Gehäuses ausgebildet. Er umgibt den nicht gezeigten, den Sekundärteil 23 tragenden Laserschneidkopf 6 an vier Seiten. In Fig. 8 strichpunktiert angedeutet ist die Achse des Laserstrahls 8. Nachdem die Primärteile 19/1, 19/2 der Linearmotoren 21, 22 in y-Richtung beidseits des Primärteils 20 des Linearmotors 24 angeordnet sind und nachdem die Achse des Laserstrahls 8 auf Höhe der Mitte des Primärteils 20 verläuft, erfolgt die Einleitung der Antriebskraft an den Linearmotoren 21, 22 symmetrisch bezüglich der Achse des Laserstrahls 8. Dieser Umstand trägt zu einer gleichbleibend hochgenauen Ausrichtung des von dem Laserschneidkopf 6 auf das Blech 9 gerichteten Laserstrahls 8 bei.

Mit Hilfe der beschriebenen Antriebskomponenten lässt sich der Laserschneidkopf 6 bzw. der aus diesem austretende Laserstrahl 8 an jede gewünschte Stelle des zu bearbeitenden Blechs 9 bewegen. Die Verfahrbewegung des Laserschneidkopfs 6 in Richtung der z-Achse dient dabei in erster Linie der Anpassung der Maschine an die zu schneidende Blechdicke. Entsprechend ist der Verfahrweg des Laserschneidkopfs 6 in Richtung der z-Achse erheblich kürzer als der Verfahrweg der Einheit von Führungsschlitten 13 und Laserschneidkopf 6 in Richtung der y-Achse.

## Patentansprüche

1. Werkzeugmaschine mit einer Funktionseinheit (6), die mittels wenigstens eines ersten Linearmotors (24) an einer ersten Führungsstruktur (13) in Richtung einer ersten Bewegungsachse (z-Achse) und die mittels wenigstens eines zweiten Linearmotors (21, 22) und gemeinschaftlich mit der ersten Führungsstruktur (13) an einer zweiten Führungsstruktur (5) in Richtung einer zweiten Bewegungsachse (y-Achse) bewegbar ist, wobei jeder der Linearmotoren (21, 22, 24) einen Primärteil (19/1, 19/2, 20) sowie einen Sekundärteil (15/1, 17; 15/2, 17; 23) aufweist und der oder die der zweiten Bewegungsachse (y-Achse) zugeordneten Sekundärteile (15/1, 17; 15/2, 17) mit der zweiten Führungsstruktur (5) und die den verschiedenen Bewegungsachsen (y-Achse, z-Achse) zugeordneten Primärteile (19/1, 19/2, 20) mit der ersten Führungsstruktur (13) bewegungsverbunden sind, **dadurch gekennzeichnet, dass** der oder die der ersten Bewegungsachse (z-Achse) zugeordneten Sekundärteile (23) mit der Funktionseinheit (6) bewegungsverbunden sind und dass die den verschiedenen Bewegungsachsen (y-Achse, z-Achse) zugeordneten Primärteile (19/1, 19/2, 20) zwischen dem oder den der ersten Bewegungsachse (z-Achse) zugeordneten Sekundärteilen (23) einerseits und dem oder den der zweiten Bewegungsachse (y-Achse) zugeordneten Sekundärteilen (15/1, 17; 15/2; 17) andererseits sowie in Richtung einer Bewegungsachse (y-Achse) nebeneinander angeordnet sind und in Richtung der anderen Bewegungsachse (z-Achse) sowie senkrecht zu der von den Bewegungsachsen (y-Achse, z-Achse) definierten Bewegungsebene der Funktionseinheit (6) miteinander überlappen.

2. Werkzeugmaschine nach Anspruch 1, **dadurch gekennzeichnet, dass** die den verschiedenen Bewegungsachsen (y-Achse, z-Achse) zugeordneten Primärteile (19/1, 19/2, 20) in Richtung der betreffenden Bewegungsachse (z-Achse) mit vollständiger Überdeckung miteinander überlappen.

3. Werkzeugmaschine nach einem der vorhergehenden Ansprüche, **dadurch gekennzeichnet, dass** die den verschiedenen Bewegungsachsen (y-Achse, z-Achse) zugeordneten Primärteile (19/1, 19/2, 20) in Richtung der zweiten Bewegungsachse (y-Achse) nebeneinander liegen und in Richtung der ersten Bewegungsachse (z-Achse) miteinander überlappen.

4. Werkzeugmaschine nach einem der vorhergehenden Ansprüche, **dadurch gekennzeichnet, dass** die den verschiedenen Bewegungsachsen (y-Achse, z-Achse) zugeordneten Primärteile (19/1, 19/2, 20) senkrecht zu der von den Bewegungsachsen (y-Achse, z-Achse) definierten Bewegungsebene der Funktionseinheit (6) gegeneinander versetzt sind, wobei der oder die einer Bewegungsachse (y-Achse, z-Achse) zugeordneten Primärteile (19/1, 19/2; 20) gegenüber dem oder den anderen Primärteilen (19/1, 19/2; 20) zu dem oder den zugehörigen Sekundärteilen (15/1, 17; 15/2, 17; 23) hin angeordnet sind.

5. Werkzeugmaschine nach einem der vorhergehenden Ansprüche, **dadurch gekennzeichnet, dass** zur gemeinschaftlichen Bewegung der Funktionseinheit (6) und der ersten Führungsstruktur (13) in Richtung der zweiten Bewegungsachse (y-Achse) eine gerade Mehrzahl von Linearmotoren (21, 22) vorgesehen ist und dass die Primärteile (19/1, 19/2) dieser Linearmotoren (21, 22)in Richtung der betreffenden Bewegungsachse (y-Achse) zu gleichen Teilen beidseits des oder der der ersten Bewegungsachse (z-Achse) zugeordneten Primärteile (20) angeordnet sind.

6. Werkzeugmaschine nach einem der vorhergehenden Ansprüche, **dadurch gekennzeichnet, dass** für die den verschiedenen Bewegungsachsen (y-Achse, z-Achse) zugeordneten Primärteile (19/1, 19/2, 20) jeweils ein Teilgehäuse (18/1, 18/2, 18/3) vorgesehen ist und dass diese Teilgehäuse (18/1, 18/2, 18/3) ein baueinheitliches Primärteilgehäuse (18) bilden, wobei an dem Primärteilgehäuse (18) wenigstens ein mehreren Primärteilen (19/1, 19/2, 20) gemeinsamer Anschluss (32, 33, 34, 35) für zumindest eine äußere Versorgungsleitung, zumindest eine äußere Überwachungsleitung, zumindest eine äußere Steuerleitung und/oder dergleichen vorgesehen ist,

7. Werkzeugmaschine nach einem der vorhergehenden Ansprüche, **dadurch gekennzeichnet, dass** an dem Primärteilgehäuse (18) wenigstens ein mehreren Primärteilen (19/1, 19/2, 20) gemeinsamer Anschluss (32, 33, 34, 35) für zumindest eine Stromversorgungsleitung (26) und/oder für zumindest eine Kühlmittelversorgungsleitung (28) und/oder für zumindest eine Temperaturüberwachungsleitung (30) vorgesehen ist.

8. Werkzeugmaschine nach einem der vorhergehenden Ansprüche in Form einer Laserbearbeitungsmaschine mit einem Laserbearbeitungskopf als Funktionseinheit (6).

## Claims

1. Machine tool having a functional unit (6) which is movable by means of at least a first linear motor (24) on a first guide structure (13) in the direction of a first axis of movement (z axis) and which is movable by means of at least a second linear motor (21, 22) and together with the first guide structure (13) on a second guide structure (5) in the direction of a second axis of movement (y axis), each of the linear motors (21, 22, 24) having a primary part (19/1, 19/2, 20) and a secondary part (15/1, 17; 15/2, 17; 23), and the secondary part(s) (15/1, 17; 15/2, 17) associated with the second axis of movement (y axis) being connected for movement to the second guide structure (5), and the primary parts (19/1, 19/2, 20) associated with the different axes of movement (y axis, z axis) being connected for movement to the first guide structure (13), **characterised in that** the secondary part(s) (23) associated with the first axis of movement (z axis) is (are) connected for movement to the functional unit (6) and **in that** the primary parts (19/1, 19/2, 20) associated with the different axes of movement (y axis, z axis) are arranged between the secondary part(s) (23) associated with the first axis of movement (z axis), on the one hand, and the secondary part(s) (15/1, 17; 15/2; 17) associated with the second axis of movement (y axis), on the other hand, and are arranged next to each other in the direction of one axis of movement (y axis) and overlap each other in the direction of the other axis of movement (z axis) and perpendicularly to the plane of movement of the functional unit (6) defined by the axes of movement (y axis, z axis).

2. Machine tool according to claim 1, **characterised in that** the primary parts (19/1, 19/2, 20) associated with the different axes of movement (y axis, z axis) overlap each other with full coverage in the direction of the relevant axis of movement (z axis).

3. Machine tool according to either of the preceding claims, **characterised in that** the primary parts (19/1, 19/2, 20) associated with the different axes of movement (y axis, z axis) lie next to each other in the direction of the second axis of movement (y axis) and overlap each other in the direction of the first axis of movement (z axis).

4. Machine tool according to any one of the preceding claims, **characterised in that** the primary parts (19/1, 19/2, 20) associated with the different axes of movement (y axis, z axis) are offset relative to each other perpendicularly to the plane of movement of the functional unit (6) defined by the axes of movement (y axis, z axis), the primary part(s) (19/1, 19/2; 20) associated with one axis of movement (y axis, z axis) being arranged towards the associated secondary part(s) (15/1, 17; 15/2, 17; 23) relative to the other primary part(s) (19/1, 19/2; 20).

5. Machine tool according to any one of the preceding claims, **characterised in that** an even plurality of linear motors (21, 22) are provided for the common movement of the functional unit (6) and the first guide structure (13) in the direction of the second axis of movement (y axis), and **in that** the primary parts (19/1, 19/2) of those linear motors (21, 22) are arranged in the direction of the relevant axis of movement (y axis) in equal parts on both sides of the primary part(s) (20) associated with the first axis of movement (z axis).

6. Machine tool according to any one of the preceding claims, **characterised in that** a respective part-housing (18/1, 18/2, 18/3) is provided for each of the primary parts (19/1, 19/2, 20) associated with the different axes of movement (y axis, z axis), and **in that** those part-housings (18/1, 18/2, 18/3) form a structurally uniform primary part housing (18), at least one connection (32, 33, 34, 35) common to several primary parts (19/1, 19/2, 20) being provided on the primary part housing (18) for at least one external supply line, at least one external monitoring line, at least one external control line and/or the like.

7. Machine tool according to any one of the preceding claims, **characterised in that** at least one connection (32, 33, 34, 35) common to several primary parts (19/1, 19/2, 20) is provided on the primary part housing (18) for at least one power supply line (26) and/or for at least one coolant supply line (28) and/or for at least one temperature monitoring line (30).

8. Machine tool according to any one of the preceding claims in the form of a laser processing machine having a laser processing head as the functional unit (6).

## Revendications

1. Machine-outil avec une unité fonctionnelle (6) qui est déplaçable au moyen d'au moins un premier moteur linéaire (24) sur une première structure de guidage (13) en direction d'un premier axe de déplacement (axe z) et au moyen d'au moins un deuxième moteur linéaire (21, 22) et en commun avec la première structure de guidage (13) sur une deuxième structure de guidage (5) en direction d'un deuxième axe de déplacement (axe y), chacun des moteurs linéaires (21, 22, 24) présentant une partie primaire (19/1, 19/2, 20) ainsi qu'une partie secondaire (15/1, 17 ; 15/2, 17 ; 23), la ou les parties secondaires (15/1, 17 ; 15/2, 17) associées au deuxième axe de déplacement (axe y) étant liées en déplacement avec la deuxième structure de guidage (5) et les parties primaires (19/1, 19/2, 20) associées aux différents axes de déplacement (axe y, axe z) l'étant avec la première structure de guidage (13), **caractérisée par le fait que** la ou les parties secondaires (23) associées au premier axe de déplacement (axe z) sont liées en déplacement avec l'unité fonctionnelle (6) et que les parties primaires (19/1, 19/2, 20) associées aux différents axes de déplacement (axe y, axe z) sont disposées
entre la ou les parties secondaires (23) associées au premier axe de déplacement (axe z) d'une part et la ou les parties secondaires (15/1, 17 ; 15/2, 17) associées au deuxième axe de déplacement (axe y) d'autre part ainsi que côte à côte en direction d'un axe de déplacement (axe y) et se chevauchent en direction de l'autre axe de déplacement (axe z) ainsi que perpendiculairement au plan de déplacement de l'unité fonctionnelle (6) défini par les axes de déplacement (axe y, axe z).

2. Machine-outil selon la revendication 1, **caractérisée par le fait que** les parties primaires (19/1, 19/2, 20) associées aux différents axes de déplacement (axe y, axe z) se chevauchent avec recouvrement complet en direction de l'axe de déplacement concerné (axe z).

3. Machine-outil selon l'une des revendications précédentes, **caractérisée par le fait que** les parties primaires (19/1, 19/2, 20) associées aux différents axes de déplacement (axe y, axe z) sont disposées côte à côte en direction du deuxième axe de déplacement (axe y) et se chevauchent en direction du premier axe de déplacement (axe z).

4. Machine-outil selon l'une des revendications précédentes, **caractérisée par le fait que** les parties primaires (19/1, 19/2, 20) associées aux différents axes de déplacement (axe y, axe z) sont décalées les unes par rapport aux autres perpendiculairement au plan de déplacement de l'unité fonctionnelle (6) défini par les axes de déplacement (axe y, axe z), la ou les parties primaires (19/1, 19/2, 20) associées à un axe de déplacement (axe y, axe z) étant disposées vers la ou les parties secondaires (15/1, 17 ; 15/2, 17 ; 23) associées par rapport à la ou aux autres parties primaires (19/1, 19/2, 20).

5. Machine-outil selon l'une des revendications précédentes, **caractérisée par le fait qu'**il est prévu une pluralité paire de moteurs linéaires (21, 22) pour le déplacement en commun de l'unité fonctionnelle (6) et de la première structure de guidage (13) en direction du deuxième axe de déplacement (axe y) et que les parties primaires (19/1, 19/2) de ces moteurs linéaires (21, 22) sont disposées à parties égales des deux côtés de la ou des parties primaires (20) associées au premier axe de déplacement (axe z) en direction de l'axe de déplacement concerné (axe y).

6. Machine-outil selon l'une des revendications précédentes, **caractérisée par le fait qu'**il est prévu un boîtier de partie (18/1, 18/2, 18/3) pour chacune des parties primaires (19/1, 19/2, 20) associées aux différents axes de déplacement (axe y, axe z) et que ces boîtiers de partie (18/1, 18/2, 18/3) forment un boîtier de parties primaires (18) modulaire, au moins une connexion commune (32, 33, 34, 35) à plusieurs parties primaires (19/1, 19/2, 20) étant prévues sur le boîtier de parties primaires (18) pour au moins une ligne d'alimentation externe, au moins une ligne de surveillance externe, au moins une ligne de commande externe et/ou analogue.

7. Machine-outil selon l'une des revendications précédentes, **caractérisée par le fait qu'**il est prévu sur le boîtier de parties primaires (18) au moins une connexion (32, 33, 34, 35) commune à plusieurs parties primaires (19/1, 19/2, 20) pour au moins une ligne d'alimentation en courant (26) et/ou pour au moins une ligne d'alimentation en moyen de refroidissement (28) et/ou pour au moins une ligne de surveillance de la température (30).

8. Machine-outil selon l'une des revendications précédentes sous la forme d'une machine d'usinage par laser avec une tête d'usinage par laser comme unité fonctionnelle (6).
